# EUROPÄISCHE PATENTSCHRIFT

(11) **EP 1 671 719 B1**
(45) Veröffentlichungstag und Bekanntmachung des Hinweises auf die Patenterteilung: **21.01.2009**
(21) Anmeldenummer: 05111491.6
(22) Anmeldetag: 30.11.2005
(51) Int. Cl.: B21K 3/04, B23P 15/02, B21J 5/02

(54) **Verfahren zur Herstellung von hoch belastbaren Bauteilen durch Präzisionsschmieden**
Method for the manufacture of heavy-duty components by precision forging
Procédé de fabrication de pièces à capacité de charge élévee par forgeage de précision

(30) Priorität: 17.12.2004 DE 102004062174
(43) Veröffentlichungstag der Anmeldung: 21.06.2006
(73) Patentinhaber: Rolls-Royce Deutschland Ltd & Co KG, 15827 Blankenfelde-Mahlow (DE)
(72) Erfinder: Roth-Fagaraseanu, Dan, 14532 Stahnsdorf (DE)
(74) Vertreter: Wablat, Wolfgang

(56) Entgegenhaltungen:
- EP-A- 0 704 263
- GB-A- 618 697
- US-A- 2 422 193
- US-A- 2 987 806
- US-A- 4 101 712

## Beschreibung

Die Erfindung betrifft ein Verfahren zur Herstellung von hoch belastbaren Bauteilen durch Präzisionsschmieden, vorzugsweise Verdichter- oder Turbinenschaufeln oder ähnliche Bauteile mit unterschiedlichen Belastungs- und Volumenbereichen, gemäß Oberbegriff des Anspruchs 1.

Ein solches Verfahren ist aus der US-A-2 987 806 bekannt.

Die Herstellung von Turbinen- oder Verdichterschaufeln für Flugtriebwerke erfolgt bekanntermaßen durch Warmschmieden eines aus einem in der Regel zylindrischen Ausgangsmaterial bestehenden Rohlings in einer Vielzahl aufeinanderfolgender Formgebungsschritte - gegebenenfalls mit zwischenzeitlichem Entgraten sowie Oberflächenbearbeitung und Wärmebehandlung zur Rekristallisation - bis auf eine nahe der Endgeometrie liegende Vorform. Aus der Vorform, die in diesem Fall bereits ein Schaufelblatt, eine Plattform und einen Schaufelfuß umfasst, wird dann durch weitere maschinelle Prozesse, wie zum Beispiel Entgraten, Reinigen, Kaltschmieden, Oberflächenbearbeitung, die endgültige Form der Schaufel erzeugt.

Gemäß der GB 727 688 wird am Beispiel von Turbinenschaufeln ein Verfahren zur Herstellung von Präzisionsbauteilen mit komplizierter Kontur beschrieben, bei dem aus einem stangenartigen Ausgangsmaterial in mehreren Warmverformungsschritten zunächst eine Vorform geschmiedet wird und anschließend - nach vorhergehendem Entgraten und Reinigen - in einem Kaltverformungsschritt unter hohem Druck die Schaufel in ihrer genauen Form und Dimensionierung hergestellt wird. Auch in dem in der US 6 138 491 beschriebenen Verfahren wird aus einem zylindrischen Rohling zunächst eine Vorform geschmiedet, die anschließend in einem Schmiedegesenk ihre endgültige Form erhält. Gemäß der US 5 173 134 werden aus Titanlegierungen bestehende Verdichterscheiben und -schaufeln für Flugtriebwerke derart hergestellt, dass zunächst durch Warmschmieden eine Vorform erzeugt wird, die durch Warmverformung in einem Schmiedegesenk fertiggeschmiedet wird.

Die verschiedenen Teile der Schaufel, nämlich Schaufelblatt, Plattform und Schaufelfuß, haben zum einen erheblich voneinander abweichende Volumina und sind zudem während des Betriebes im Flugtriebwerk in den einzelnen Schaufelbereichen (partiell) unterschiedlichen Belastungen ausgesetzt. Während der obere Teil des Schaufelblattes ein besonders kleines Volumen und der mittlere Teil der Schaufel, bestehend aus der Plattform und dem unteren Schaufelblattteil sowie dem oberen Schaufelfußteil, ein großes Volumen aufweist, hat der verbleibende untere Teil des Schaufelfußes ein im Vergleich zu den zuvor erwähnten Volumenbereichen etwa mittleres Volumen. Entsprechend unterschiedlich ist bei einem gleichmäßig, z.B. zylindrisch, geformten Rohling die in den jeweiligen Volumenbereichen erforderliche Verformung.

Unterschiedlich ist in den einzelnen Volumenbereichen auch die im Betrieb auftretende Belastung. Während in dem oberen Schaufelblattteil mit kleinem Volumen eine dynamische Belastung im Bereich hoher Frequenzen und in dem mittleren Schaufelbereich mit großem Volumen eine hohe statische Belastung auftritt, ist in dem unteren Teil der Schaufel mit dem mittleren Volumen eine eher geringe Belastung zu verzeichnen.

In Abhängigkeit von den Formgebungskräften und verformten Volumina wird im Ergebnis der Formgebung sowie den Formgebungsschritten nachgeschalteten Wärmebehandlungs- bzw. Rekristallisationsschritten außerdem ein den geforderten Festigkeitseigenschaften genügendes Feingefüge erzielt. Die Anzahl der Formgebungsschritte richtet sich bei dem aus einem regelmäßig, zum Beispiel zylindrisch, ausgebildeten Ausgangswerkstück geschmiedeten Endprodukt mit unterschiedlichen Volumenbereichen letztlich nach der zu erzielenden Form und nicht nach der für die Festigkeit notwendigen Gefügeausbildung. Das heißt, wenn die gewünschten Festigkeitseigenschaften und die dementsprechend erforderliche Gefügeausbildung nach wenigen Formgebungsschritten schon erreicht sind, wird das Werkstück mit erheblichem Aufwand für die Umformung und Zwischenbehandlung noch weiter bearbeitet, um zu der endgültigen Bauteilgeometrie zu gelangen. Andererseits ist es aber auch denkbar, dass in bestimmten Volumenbereichen mit einer nur geringen Volumenänderung und entsprechen geringer Verformungswirkung das erforderliche Feingefüge nicht erreicht wird.

Der Erfindung liegt die Aufgabe zugrunde, ein Umformverfahren zur Herstellung von durch Präzisionsschmieden gefertigten Bauteilen, insbesondere von Verdichter- oder Turbinenschaufeln für Flugtriebwerke oder von ähnlichen Schmiedeteilen, die Bereiche mit unterschiedlichen Volumina und unterschiedlicher Belastung aufweisen, anzugeben, das bei in Bezug auf Durchlaufzeiten und Prozesskosten verringertem Fertigungsaufwand Präzisionsbauteile zur Verfügung stellt, die in den unterschiedlichen Belastungsbereichen zumindest die geforderten Festigkeitseigenschaften aufweisen.

Erfindungsgemäß wird die Aufgabe mit einem Verfahren gemäß den Merkmalen des Patentanspruchs 1 gelöst. Vorteilhafte Weiterbildungen der Erfindung sind Bestandteil der Unteransprüche.

Die Anwendung der Erfindung erfolgt nicht nur bei der Herstellung von Verdichter- oder Turbinenschaufeln von Gasturbinen, sondern ist auch für die Fertigung anderer Turbinenkomponenten, zum Beispiel den Scheiben von Verdichtern oder Turbinen, und generell durch konturnahe Umformung hergestellte hoch belastete Bauteile von Bedeutung. Der Kern der Erfindung besteht darin, dass die schmiedetechnische Umformung des Bauteils nicht unter dem Aspekt der Ausbildung der Form, sondern rekristallisationsbezogen unter dem Blickwinkel einer den erforderlichen Festigkeitseigenschaften entsprechenden Gefügeausbildung erfolgt. Das heißt, es wird nur so viel umgeformt, wie zum Erreichen eines durch die Umformrate und anschließende Rekristallisation bestimmten Gefüges mit bestimmten Festigkeitseigenschaften unbedingt erforderlich ist. In der konkreten Ausführung wird in einem einzigen Formgebungsschritt, nämlich in einem einstufigen Gieß- oder Sinterprozess, eine Vorform mit einer bestimmten Volumenverteilung oder vorgegebenen Volumenbereichen mit bestimmter Volumenanhäufung hergestellt. Diese Vorform wird in einer minimalen Zahl von Umformschritten (mindestens einem Schmiedeschritt) mit einer der Materialanhäufung in den Volumenbereichen entsprechenden Umformrate fertiggeschmiedet, um so aufgrund der jeweiligen, durch die Umformrate bestimmten Gefügeausbildung die gewünschten Festigkeitseigenschaften in den unterschiedlichen Belastungsbereichen des Bauteils zu erreichen. Mit dem Verfahren wird daher mit wenigen Umformungsschritten und dementsprechend geringer Zahl von Zwischenbehandlungsschritten (Glühen, Entgraten, Reinigen, Oberflächenbehandeln) eine effektive Herstellung von hochbelastbaren, im Betrieb partiell unterschiedlich belasteten Bauteilen ermöglicht.

Ein Ausführungsbeispiel der Erfindung wird anhand der Herstellung einer Verdichterschaufel für eine Fluggasturbine näher erläutert. Die zugehörige Zeichnung zeigt in
- Fig. 1: eine fertige Verdichterschaufel, in der die unterschiedlichen Volumenbereiche und Belastungsbereiche gekennzeichnet sind; und
- Fig. 2: eine in einem Sinter- oder Gießprozess vorgefertigte Schaufelvorform, die unter dem Aspekt der unterschiedlichen Festigkeitsanforderungen und Volumina zu der in Fig. 1 dargestellten Verdichterschaufel fertiggeschmiedet wird.

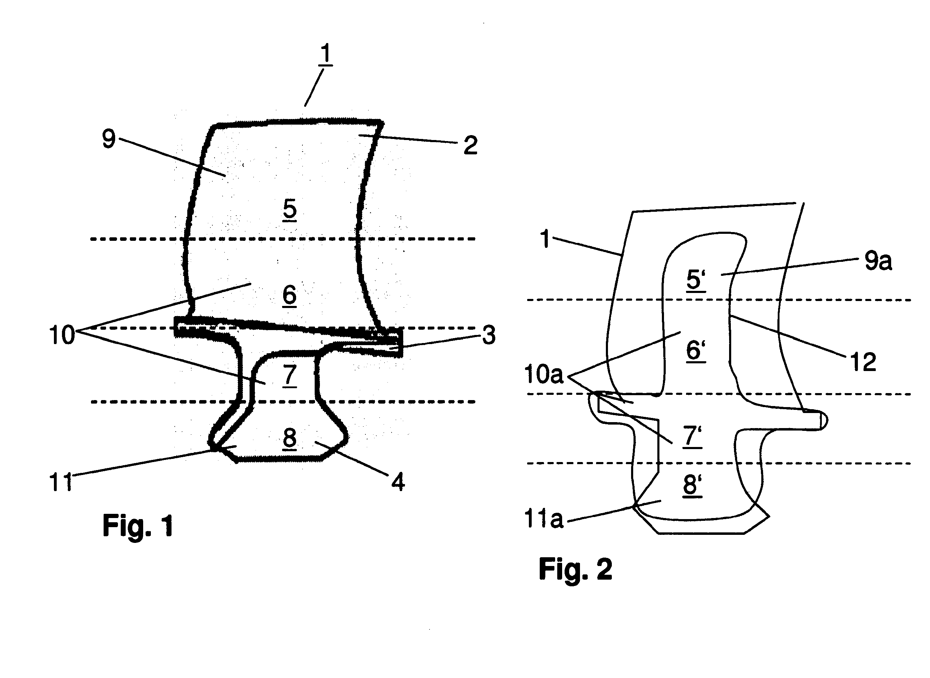

Die in Fig. 1 dargestellte fertige Verdichterschaufel 1 umfasst ein Schaufelblatt 2, eine Plattform 3 und einen Schaufelfuß 4. Während des Betriebes ist die Verdichterschaufel 1 partiell, das heißt in verschiedenen Schaufelbereichen, unterschiedlich belastet. In einem ersten Belastungsbereich 5 mit kleinem Volumen, der etwa die von der Schaufelspitze ausgehende obere Schaufelblatthälfte betrifft, tritt eine dynamische Belastung bei hohen Frequenzen auf, während die statische Belastung niedrig ist. In dem zweiten, etwa die untere Schaufelblatthälfte umfassenden zweiten Belastungsbereich 6 mit großem Volumen herrscht eine mittlere statische Belastung sowie eine dynamische Belastung bei niedriger Frequenz. Der dritte Belastungsbereich 7 mit ebenfalls großem Volumen, der die Plattform 3 und den an diese anschließenden oberen Teil des Schaufelfußes 4 einschließt, ist statisch hoch und dynamisch gering belastet. Der vierte Belastungsbereich 8 mit mittlerem Volumen, der die untere Hälfte des Schaufelfußes 4 betrifft, ist niedrig belastet. Die Verdichterschaufel 1 weist somit auch drei Volumenbereiche 9 bis 11 mit jeweils unterschiedlichem Volumen, nämlich einen dem ersten Belastungsbereich 5 entsprechenden ersten Volumenbereich 9 mit kleinem Volumen, einen dem zweiten und dritten Belastungsbereich 6, 7 entsprechenden zweiten Volumenbereich 10 mit großem Volumen und einen dem vierten Belastungsbereich entsprechenden dritten Volumenbereich 11 mit einem im Vergleich zu den Volumenbereichen 9 und 10 etwa mittelgroßen Volumen.

Die in Fig. 2 strichliert dargestellte Schaufelvorform 12 ist ein in einem einzigen Verfahrensschritt durch einen Gießvorgang, zum Beispiel Zentrifugalgießen, oder durch einen pulvermetallurgischen Sinterprozess gefertigter Rohling, in dem die entsprechend dem Fertigerzeugnis unterschiedlich verteilten Volumina in einem ersten bis dritten Vorvolumenbereich 19a, 10a und 11a bereits so angeordnet und dimensioniert sind, dass in dem anschließenden Umformprozess durch Schmieden mit einer minimalen Anzahl von Verformungsschritten, beispielsweise mittels eines Gesenkschmiedepresse, das der jeweiligen Belastung genügende Gefüge ausgebildet wird. In der Schaufelvorform 12 sind die künftigen Belastungsbereiche mit den Bezugszeichen 5' bis 8' bezeichnet. Das heißt, der Umformungsgrad wird durch die erforderliche Gefügeausbildung und die damit zu erzielenden Festigkeitseigenschaften bestimmt, während gleichzeitig die an der Schaufelvorform vorgenommene restliche Volumenverteilung zur Erzielung der gewünschten Endform ausreicht. Das heißt mit anderen Worten, dass die Volumina in der Vorform so verteilt sind, dass mit einer jeweils maximal erforderlichen Endverformung auch die belastungsbedingt notwendige Gefügeausbildung vorgenommen wird. Noch anders ausgedrückt ist der zum Erreichen der Endform erforderliche Umformungsgrad gerade noch so groß, dass dabei das der jeweiligen Belastung entsprechende Gefüge ausgebildet wird, wobei in dem vorliegenden Ausführungsbeispiel der Umformungsgrad im zweiten und dritten Belastungsbereich 6, 7 größer als im ersten und vierten Belastungsbereich 5, 8 ist und im ersten Belastungsbereich 5 größer als im vierten Belastungsbereich 8 ist. Während der Umformung und der anschließenden Wärmebehandlung erfolgt die die Gefügeeinstellung durch die Rekristallisation in einem der jeweiligen Umformrate und späteren Betriebsbelastung der Schaufel 1 erforderlichen Maß.

Die Erfindung ist nicht auf das zuvor anhand einer Verdichterschaufel beschriebene Ausführungsbeispiel beschränkt, sondern kann auch bei anderen durch Präzisionsschmieden gefertigten Bauteilen, insbesondere Turbinenkomponenten angewendet werden, um durch eine geringere Zahl von Verformungsschritten und Zwischenschritten, wie zum Beispiel Reinigen, Sandstrahlen, Schleifen, Entgraten oder Zwischenglühen den zeitlichen und gerätetechnischen Aufwand zu senken sowie wertvolle, auf Titan- und Nickelbasis gebildete Werkstoffe einzusparen. Es hat sich für die Herstellung von Schaufeln zudem herausgestellt, dass bei bestimmten Materialien die durch Gießen hergestellte Vorform ein zwar gröberes, aber gleichmäßigeres Gefüge aufweist, das bei der Herstellung der Endform gegenüber dem beim Schmieden der Vorform auftretenden streifigen Gefüge weniger problematisch ist.

### Bezugszeichenliste

- 1: Verdichterschaufel, hoch belastbares Bauteil
- 2: Schaufelblatt
- 3: Plattform
- 4: Schaufelfuß
- 5, 5': erster Belastungsbereich von 1, 12
- 6, 6': zweiter Belastungsbereich
- 7, 7': dritter Belastungsbereich
- 8, 8': vierter Belastungsbereich
- 9, 9a: erster Volumenbereich von 1, 12
- 10, 10a: zweiter Volumenbereich
- 11, 11a: dritter Volumenbereich
- 12: Schaufelvorform, Vorform

## Patentansprüche

1. Verfahren zur Herstellung von hoch belastbaren Bauteilen durch Präzisionsschmieden, vorzugsweise Verdichter- oder Turbinenschaufeln oder ähnliche Bauteile (1) mit unterschiedlichen Belastungsbereichen (5 bis 8) und Volumenbereichen (9 bis 11), bei dem zunächst in einem einstufigen Formgebungsschritt eine Vorform (12) des betreffenden Bauteils (1) mit noch weiter umformbaren Volumina von bestimmter Größe in den kritischen Belastungsbereichen gefertigt wird und die Vorform (12) anschließend mit einer auf die umformbaren Volumina beschränkten und auf eine belastungs- und festigkeitsspezifisch notwendige Gefügeausbildung in den kritischen Belastungsbereichen des fertigen Bauteils gerichteten Umformrate fertiggeschmiedet wird, **dadurch gekennzeichnet, dass** die Vorform (12) den Belastungsbereichen (5-8) entsprechende Volumenbereiche (9a-11a) mit einer bestimmten unterschiedlichen Volumenverteilung oder -anhäufung zur Erzielung eine an die unterschiedliche statische und/oder dynamische Beanspruchung des gesamten Bauteils jeweils angepassten Gefügestruktur beim Fertigschmieden aufweist.

2. Verfahren nach Anspruch 1, **dadurch gekennzeichnet, dass** die Vorform (12) in einem Gießprozess hergestellt wird.

3. Verfahren nach Anspruch 2, **dadurch gekennzeichnet, dass** die Vorform (12) durch Zentrifugalgießen hergestellt wird.

4. Verfahren nach Anspruch 1, **dadurch gekennzeichnet, dass** das Bauteil (1) nach dem Fertigschmieden zur gewünschten Gefügeeinstellung wärmebehandelt wird.

5. Verfahren nach Anspruch 1, **dadurch gekennzeichnet, dass** die Vorform (12) in einem pulvermetallurgischen Sinterprozess hergestellt wird.

6. Verfahren nach Anspruch 1, **dadurch gekennzeichnet, dass** das Fertigschmieden der Vorform zur Erzielung der Endform mit belastungsspezifischer Gefügeausbildung durch Gesenkschmieden in mindestens einem Umformschritt erfolgt.

## Claims

1. Method for the manufacture of highly loadable components by precision forging, preferably of compressor or turbine blades or similar components (1) having different load (5 to 8) and volume zones (9 to 11), where initially a preform (12) of the respective component (1) is produced in a one-step forming operation, with the preform having further deformable volume zones of certain respective sizes in the critical load zones, and the preform (12) is subsequently finish-forged at a deformation rate which is limited to the deformable volume zones and directed to the load and strength-specific structural requirements in the critical load zones of the finished component, **characterized in that** the preform (12) has volume zones (9a to 11a) corresponding to the respective load zones (5 to 8) with a certain different volume distribution and accumulation to achieve a structure during finish-forging that is adapted to the different static and/or dynamic loading of the whole component.

2. Method in accordance with Claim 1, **characterized in that** the preform (12) is produced by a casting process.

3. Method in accordance with Claim 2, **characterized in that** the preform (12) is produced by centrifugal casting.

4. Method in accordance with Claim 1, **characterized in that** the component (1) is heat-treated upon finish-forging to control the structure in the desired manner.

5. Method in accordance with Claim 1, **characterized in that** the preform (12) is produced by a powder-metallurgical sintering process.

6. Method in accordance with Claim 1, **characterized in that** finish-forging of the preform to obtain the final form with load-specific structure is performed by die forging in at least one deformation step.

## Revendications

1. Procédé de fabrication par forgeage de précision de composants hautement résistants, de préférence des aubes de compresseur ou de turbine ou composants similaires (1) avec différentes zones de charge (5 à 8) et volumiques (9 à 11), dans lequel, lors d'une opération de façonnage en une étape, est tout d'abord fabriquée une ébauche (12) du composant (1) en question avec des volumes encore déformables et d'une certaine taille dans les zones de charge critiques, et l'ébauche (12) est ensuite soumise à un forgeage de finition avec un taux de déformation limité aux volumes déformables présents, et orienté sur une structure requise spécifique en termes de charge et de résistance dans les zones de charge critiques du composant fini, **caractérisé en ce que** l'ébauche (12) présente au forgeage de finition des zones volumiques (9a à 11a) correspondant aux zones de charge (5 à 8) avec chacune une certaine répartition ou accumulation de volume distincte afin d'obtenir une structure adaptée respectivement aux différentes charges statiques et/ou dynamiques de la totalité du composant.

2. Procédé selon la revendication n° 1, **caractérisé en ce que** l'ébauche (12) est fabriquée dans un procédé de coulage.

3. Procédé selon la revendication n° 2, **caractérisé en ce que** l'ébauche (12) est fabriquée par coulage centrifuge.

4. Procédé selon la revendication n° 1, **caractérisé en ce que** qu'après le forgeage de finition, le composant (1) subit un traitement thermique pour obtenir le réglage souhaité de la structure.

5. Procédé selon la revendication n° 1, **caractérisé en ce que** l'ébauche (12) est fabriquée dans un procédé de frittage mettant en oeuvre de la poudre métallique.

6. Procédé selon la revendication n° 1, **caractérisé en ce que** le forgeage de finition de l'ébauche est effectué par matriçage dans au moins une opération de déformation afin d'obtenir la forme définitive avec la structure spécifique en termes de charge.
